# EUROPEAN PATENT SPECIFICATION

(11) **EP 2 511 423 B1**
(45) Date of publication and mention of the grant of the patent: **22.03.2017**
(21) Application number: 11162605.7
(22) Date of filing: 15.04.2011
(51) Int. Cl.: E02B 17/00, E04H 12/10, E04H 12/34, E04H 12/00

(54) **Jacket structure and method of assembling such a jacket structure**
Eine Offshore Jacketstruktur und Verfahren zur Montage einer solchen Offshore Jacketstruktur
Une tour de type offshore jacket et procédé pour assembler une telle tour de type offshore jacket

(43) Date of publication of application: 17.10.2012
(73) Proprietor: Siemens Aktiengesellschaft, 80333 München (DE)
(72) Inventor: Oestergaard, Thomas, 6000, Kolding (DK); Stiesdal, Henrik, 5000, Odense C (DK)

(56) References cited:
- EP-A2- 2 067 915
- GB-A- 1 317 854
- GB-A- 1 512 634
- GB-A- 2 309 246
- US-A- 4 721 416
- US-A1- 2004 128 940

## Description

The invention describes a method of assembling a jacket structure, a jacket structure, and a jacket assembly guide. A wind turbine for an offshore wind park must be mounted securely to withstand the forces exerted on it by water and wind. In shallow offshore locations, the wind turbine tower can be mounted on a concrete plinth or foundation that extends into the sea bed. However, for other offshore locations, such mounting techniques may be unsuitable for various reasons. Usually, a "jacket structure" made of three or four upright steel legs is used to support the wind turbine tower in such offshore locations. The upright legs are interconnected by a mesh of braces in the manner of a pylon. The relatively small surface area of such a jacket structure means that it can withstand the forces exerted on it by the water in which it is submerged. The jacket structure is usually relatively narrow at the top, becoming progressively wider towards the base to provide the necessary structural stability. The base of the jacket structure can be anchored to a concrete foundation on the sea bed, or each leg of the jacket structure could be secured to a separate pile driven into the sea bed. Such jacket structures, suitable for supporting the weight of a wind turbine, are disclosed in EP 2067915 A2 and US 4721416 A1. A lightweight jacket structure, for example for use in a space-based satellite application, is described in US 2004/0128940 A1.

In particular, document EP2067915 discloses a jacket structure for supporting an offshore wind turbine, comprising a plurality of legs, a plurality of connecting braces and a plurality of node elements arranged on the legs for connecting the braces to the legs, which jacket structure comprises furthermore a node-to-leg connection between each node element and a leg; and a brace-to-node connection between each brace and node element.

A jacket structure for an off-shore wind turbine can be dimensioned so that about two thirds are submerged. For an average water depth of about 45 m, a jacket structure can therefore have a height of about 55 m - 56 m. The footprint of such a jacket structure can be in the range of 20 m across. Legs and braces of such a jacket structure are generally made of steel pipes or pipe sections. For the necessary structural stability, the legs of such a jacket structure might be about 1.0 m - 1.5 m in diameter, while a brace can have a diameter of about 0.6 m - 0.8 m.

A conventional approach of assembling an underwater jacket structure involves assembling modules corresponding to layers of the jacket structure. Each module comprises identical leg sections interconnected by braces extending between the neighbouring leg sections. For a tapered jacket structure that is wider at the bottom and narrower at the top, a series of differently-sized modules is constructed, and the completed modules are then successively hoisted into position, stacked on top of each other, and fastened together. The braces are connected to the legs by means of some suitably shaped node element. For example, a node element can comprise a cast piece of steel of which a part is shaped to fit the leg, and another part is shaped to connect to the end of a brace. In the known construction techniques, the node element is usually connected to the leg and to the brace by welded or bolted connections. Welded connections are usually made by automated welding stations. Assembly of the jacket structure can be carried out in any appropriate location, for example close to a port or harbour. The finished jacket structure can then be skidded to a quayside for transfer to an offshore location.

A significant disadvantage of the known method is the associated cost. For example, welded connections are relatively cost-intensive to complete, since automated welding stations are large and expensive. Furthermore, the welding procedure is very time-consuming. Therefore, for an offshore wind park comprising many turbines, the costs of such an assembly procedure can be prohibitive.

It is therefore an object of the invention to provide a more economical way of assembling jacket structures.

This object is achieved by the method of claim 1 of assembling a jacket structure and by the jacket structure of claim 9.

The jacket structure in its assembled state comprises a plurality of legs, a plurality of connecting braces and a plurality of node elements arranged on the legs for connecting the braces to the legs, a node-to-leg connection between each node element and a leg, wherein a node element comprises a sleeve, and wherein the wall thickness of the sleeve decreases towards an outer edge of the sleeve and a brace-to-node connection between each brace and a node element, wherein a node-to-leg connection and/or a brace-to-node connection comprises an adhesive joint and the adhesive joint comprises a layer of adhesive between a sleeve and a component enclosed by the sleeve, wherein the adhesive comprises an epoxy resin or grout. The method comprises the steps of forming a node-to-leg connection between each node element and a leg, wherein a node element comprises a node sleeve, and wherein the wall thickness of the node sleeve decreases towards an outer edge of the sleeve; and forming a brace-to-node connection between each brace and a node element, wherein a node-to-leg connection and/or a brace-to-node connection comprises an adhesive joint.

An advantage of the method according to the invention is that the step of joining a node element to a leg or brace by means of an adhesive joint is much faster and less expensive than, for example, forming a welded connection. Furthermore, an adhesive joint is very strong and can withstand high loads applied to it.

According to the invention, the jacket structure - in particular a jacket structure for supporting for an offshore wind turbine - comprises a plurality of legs, a plurality of connecting braces and a plurality of node elements arranged on the legs for connecting the braces to the legs, which jacket structure comprises a node-to-leg connection between each node element and a leg, wherein a node element comprises a sleeve, and wherein the wall thickness of the sleeve decreases towards an outer edge of the sleeve; and a brace-to-node connection between each brace and a node element; wherein a node-to-leg connection and/or a brace-to-node connection comprises an adhesive joint. The adhesive joint comprises a layer of adhesive between a sleeve and a component enclosed by the sleeve, wherein the adhesive comprises an epoxy resin or grout.

A jacket assembly guide for assembling a jacket structure - which jacket structure in its assembled state comprises a plurality of legs, a plurality of connecting braces and a plurality of node elements arranged on the legs for connecting the braces to the legs - comprises a number of supporting towers for supporting the plurality of legs such that a supported leg is held in a position corresponding to the position of that leg in the assembled state of the jacket structure; and an adhesive handling means for handling adhesive during the forming of an adhesive joint at a node-to-leg connection and/or a brace-to-node connection.

An advantage of the jacket assembly guide (not part of the claimed subject-matter) is that, because one or more legs are conveniently held in place at the correct angle by a corresponding number of supporting towers, and because the braces can be conveniently held or suspended in place between node elements on the supported legs, for example by a crane, the assembly of a jacket structure can be carried out relatively quickly, so that the overall cost of the structure can be kept favourably low. Also, because workers do not need to physically manipulate heavy legs or leg pieces into place, workplace safety is improved. The adhesive handling means can allow adhesive to be transported in a convenient manner to the level of a joint being formed. For example, an adhesive handling means can comprise a hose and pump arrangement for conveniently transporting or pumping the adhesive to where it is needed. An assembly worker might then only need to manipulate a suitable dispenser, for example a nozzle, to direct the adhesive into the joint being formed or assembled.

Furthermore, any node elements used to hold the braces in place can be conveniently attached to the legs in advance, for example before one or more of the legs are held in place by supporting towers. In contrast to the alternative known modular method, in which different modules or 'stacks' of the jacket structure are separately assembled at ground level by connecting braces between leg segments of a module and then stacking the modules, the method according to the invention allows the jacket structure to be assembled essentially as a single unit.

Another advantage of the jacket assembly guide is that the braces can effectively be arranged at any appropriate angle to interconnect the legs, so that an arrangement of the braces is not as limited as it would be in a modular design, in which braces can effectively only be connected between the levels bounded by the upper and lower leg segment ends. The supporting towers allow the braces to be conveniently held or suspended in place between the legs, for example by a crane, so that the assembly of a jacket structure according to the invention can be carried out relatively quickly, and the overall cost of the structure can be kept favourably low.

Particularly advantageous embodiments and features of the invention are given by the dependent claims, as revealed in the following description.

A node could comprise a part that is inserted between leg sections of a leg. In such an approach, the node is arranged co-linearly between a lower leg section and an upper leg section. However, in a particularly preferred embodiment of the invention, the step of forming a node-to-leg connection between a node element and a leg comprises arranging a node sleeve around a leg or a leg joint. Such a node sleeve can be arranged around an uninterrupted region of the leg, or around a leg joint such as a flanged joint. This allows leg sections to be connected directly to one another, ensuring a more stable leg design.

A node sleeve could be realised as an essentially cylindrical or conical element which could be slipped over a leg section before the adhesive joint is made between the node and the leg. However, sufficient care would need to be taken in manufacturing such a node sleeve to ensure that it fits snugly enough around the leg while leaving enough space for the adhesive layer. Therefore, in a particularly preferred embodiment of the invention, the step of arranging the node sleeve around the leg or the leg joint comprises connecting together at least two node sleeve pieces. The node sleeve pieces can be shaped as half cylinders with two straight sides and two curved, essentially semi-circular sides, and can be joined together using any suitable technique, for example using fasteners such as bolts passed through flanges arranged along abutting edges of the node sleeve pieces.

Once the node sleeve is arranged on the leg, it should be prevented from slipping from that position. Therefore, a preferred embodiment of the invention comprises the step of applying an adhesive between an outside surface of a leg and an inside surface of the node sleeve.

Each node preferably comprises at least one protruding element or 'node extension' arranged at an angle to meet the end of a brace. For example, the outer end of the node extension and the corresponding brace end can have complementary shapes that fit together. In a particularly simple and therefore favourable design, the node extension and the brace have simple tubular shapes with essentially the same diameter. In a particularly preferred embodiment of the invention, the step of forming a brace-to-node connection between a brace and a node element simply comprises arranging a brace sleeve to partially cover the node extension and the end of the brace. In practice, the connecting procedure might involve arranging a first (lower) node sleeve in place around a first leg; connecting the lower end of a brace to the node extension of the first node sleeve by means of a first brace sleeve; connecting one piece of a second (upper) node sleeve to the other end of the brace by means of a second brace sleeve and placing that node sleeve piece in place on the other leg; arranging the corresponding node sleeve piece in place and connecting it to the first node sleeve piece. In a final step, the adhesive connection can be made. In this way, geometrical tolerances or imperfections can be compensated for by positioning one or both nodes in an ad hoc manner for each brace.

In a preferred embodiment of the invention, forming a brace-to-node connection preferably also comprises the step of applying an adhesive between an inside surface of the brace sleeve and outside surfaces of the node extension and the brace. In this way, a secure and robust connection can be formed between the nodes and the braces.

In a preferred embodiment of the invention, the method of assembling the jacket structure comprises the steps of connecting at least one leg of the plurality of legs to a supporting tower of a jacket assembly guide such that the leg is held in a position corresponding to the position of that leg in the assembled state of the jacket structure; holding a brace of the plurality of connecting braces in place between node elements; providing connecting access to the node elements and the braces; connecting each brace to the node elements between which it is held; and disconnecting the leg from the supporting tower to release the assembled jacket structure.

In another embodiment of the invention, the step of forming the node-to-leg connections is carried out prior to the step of forming the brace-to-node connections. For example, the nodes can conveniently be put into place around each leg before the leg is hoisted into place and held by the supporting tower. To allow ease of connecting the braces to any node extensions, such nodes could be provisionally attached to a leg in preparation for an adhesive joint, but the actual insertion of the adhesive could be postponed for certain of these nodes until after the brace-to-node connections have been formed.

In contrast to prior art jacket structures, the jacket structure according to the invention can even comprise one-piece legs, since it is a relatively straightforward procedure to hold such a long element in a supporting tower.

In a preferred embodiment of the invention, the adhesive joint comprises a layer of adhesive between a sleeve and a component enclosed by the sleeve, wherein the adhesive comprises an epoxy resin or grout. Preferably, an adhesive is chosen on the basis of its long-term performance, for example the adhesive layer should not shrink or become brittle or porous over time.

As mentioned above, when forces are applied to the legs of the jacket structure, these forces are transferred via the adhesive layer, for example from the leg to the node sleeve. An adhesive such as an epoxy resin or cement grout is relatively hard after curing. Therefore, large forces acting on a leg could potentially result in damage to a node sleeve, since the wall thickness of the node sleeve may be relatively thin. According to the invention, the wall thickness of a sleeve, particularly a node sleeve, decreases towards an outer edge of the sleeve. Using the example of an essentially cylindrical node sleeve, the upper and lower sleeve regions would have a thinner material thickness than a central region of the node sleeve. Preferably, the wall thickness of the sleeve decreases gradually, over a relatively wide region, towards the outer edges of the sleeve.

In the assembly of a jacket structure comprising three or more legs, a jacket assembly guide with a single supporting tower for holding one of the legs can already simplify the assembly process. The remaining legs could comprise leg segments which are successively built up while the connecting braces are lifted into place and fastened to the leg. However, in a particularly preferred not claimed embodiment, the jacket assembly guide comprises a supporting tower for each leg of the jacket structure. For a four-leg jacket structure, the jacket assembly guide preferably comprises four supporting towers.

The supporting towers can be erected at a suitable site, for example close to a port and a skidding system, so that a completed jacket assembly can be skidded to a marine transport system for transport to its offshore destination. In this case, the supporting towers can be realised so that the completed jacket structure can pass through a space between the supporting towers. Once a completed jacket structure has been moved on, the legs for the next jacket structure can be hoisted into place, ready for assembly. In this way, a very fast and economical assembly of many jacket structures is made possible, so that the costs of an offshore wind park can be kept low.

To hold a leg in place while the braces are being connected, the legs could be temporarily welded into place. However, in a preferred embodiment of the invention, a supporting tower comprises a number of temporary connecting means for removably connecting a leg to the tower. For example, a supporting tower can comprises one or more clamps arranged along its length for clamping a leg into place. Such a clamp might be mechanical, for example a ratchet clamp, or might comprise a hydraulic clamp. The step of supporting a leg by a supporting tower therefore preferably comprises securely clamping the leg to the supporting tower at one or more points along the leg.

Once the legs are supported in place, workers can commence connecting the braces between appropriate points on the legs. To this end, the access means of the jacket assembly guide according to the invention preferably comprises an access platform. Such an access platform can be realised so that a worker can safely stand on the platform and access the relevant parts of the leg to which a brace is to be connected. A platform can be dimensioned so that several workers have room to manoeuvre. Of course, access can alternatively or additionally be provided by e.g. an external lift e.g. positioned on the ground.

To connect the braces to the nodes while the legs are held by the supporting towers, the braces can be lifted into place in any manner that is convenient. Preferably, the step of holding a brace between node elements comprises using a lifting apparatus to suspend the brace in position between the node elements.

Because a supporting tower can hold an entire leg while this is being connected to various braces, that leg can be a one-piece component. This gives the advantage of structural stability, since any joint between two leg segments might be a potential weak spot in the finished structure. However, such a long component may be inconvenient to manufacture. Therefore, in a preferred embodiment of the jacket structure according to the invention, a leg comprises a plurality of leg sections or pipe pieces, wherein adjacent leg sections of the leg are joined in a leg assembly step preceding the assembly of the jacket structure. For example, a pipe piece could have an external flange at each end, and adjacent pipe pieces could be bolted together using a plurality of short bolts inserted through corresponding bolt holes in the flanges. In a further preferred embodiment of the jacket structure according to the invention, the ends of adjacent leg sections are shaped to permit a shear key joint between those leg sections.

As mentioned above, a jacket structure can easily reach or exceed 50 - 60 m in height. To be able to access all parts of a leg to which a brace is to be connected, the access means of the jacket assembly guide according to the invention preferably comprises an elevator. Such an elevator can provide rapid access to all platforms of a supporting tower.

The access means can be realised as a separate entity, for example, as a type of gantry that can be moved around relative to the supporting legs. However, in a preferred embodiment of the invention, the access means is incorporated in a supporting tower, so that a supporting tower comprises one or more access platforms and/or an elevator to provide access to the platform(s). It might suffice if a single supporting tower is equipped with an elevator. For example, if each supporting tower is realised with an appropriate number of access platforms, and these access platforms are connected by gangways, then a single elevator in one of the supporting towers can be sufficient to provide worker access to each access platform. For convenience, it might be preferable if such platforms are arranged at essentially the same levels, so that gangways can be used to connect them. This might be feasible if the nodes at which braces are connected to the legs are arranged uniformly in the jacket structure design. For example, the lowest set of braces might all be of the same length and might therefore all terminate at the same level in the jacket structure. The nodes connecting the brace ends to the legs are therefore also all essentially at the same level. If a more flexible brace arrangement is desired, using braces of different lengths, the position of a gangway could be adjustable, for example using a hydraulic arrangement to raise one end of a gangway so that it can reach the next access platform.

Alternatively, in a further preferred not claimed embodiment, each supporting tower could be equipped with its own elevator as well as several access platforms. Preferably, an access platform is arranged at a level corresponding to a level of a node element of the leg supported by the supporting tower.

Of course, a supporting tower can preferably comprise a plurality of access platforms and an elevator, whereby the elevator can provide access to each access platform. A combined elevator/access platform design might also involve a funicular track, mounted for example on the exterior of a supporting leg, along which a moveable access platform can travel.

Preferably, a significant portion, more preferably a majority, of the node-to-leg and brace-to-node connections is made using adhesive connections. However, it may be desirable to make some connections in an alternative manner. For example, a node can be connected between leg sections using an internal or external flange connection. A node can be connected to a brace by means of a suitable clevis or flange connection. Alternatively, a brace and a tubular node extension can be shaped to simply fit one into the other, for example by shaping the tubular extension to fit inside the brace pipe piece, or vice versa. These and other connecting means will be described below.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig. 1 shows a jacket structure supporting an offshore wind turbine;
Fig. 2 shows a cross-section through a first embodiment of an adhesive joint in a jacket structure according to the invention;
Fig. 3 shows a detail of a cross-section through a second embodiment of an adhesive joint in a jacket structure according to the invention;
Fig. 4 shows further adhesive joints in a jacket structure according to the invention;
Fig. 5 shows an embodiment of a jacket assembly guide;
Fig. 6 shows a jacket structure being assembled using the jacket assembly guide of Fig. 5;
Fig. 7 shows a number of node elements for a jacket structure according to the invention;
Fig. 8 shows a number of brace-to-node connections in a jacket structure according to the invention;
Fig. 9 shows an expansion bolt for connecting a brace to a node element in a jacket structure according to the invention.

In the diagrams, like numbers refer to like objects throughout. Objects in the diagrams are not necessarily drawn to scale.

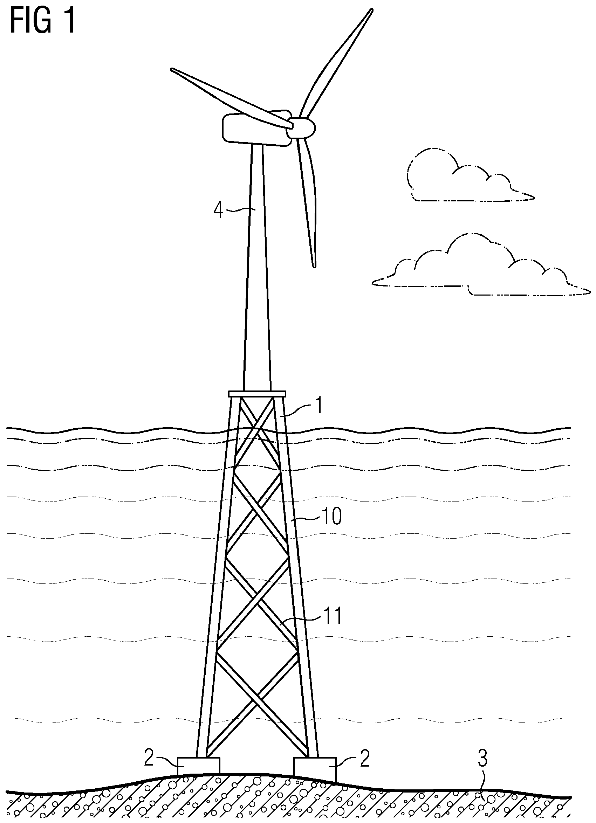

Fig. 1 shows a simplified rendering of a jacket structure 1 used in an offshore location. The jacket structure 1 comprises several legs 10 interconnected by a plurality of braces 11, and is held in place (in this example) by piles 2 driven into the sea bed 3. The jacket structure 1 serves to support a wind turbine 4 in an offshore location. The wind turbine 4 itself can be quite large, for example about 80 m in height with a rotor diameter in the range of 100-140 m, particularly when housing a powerful generator in the Megawatt range. To provide the necessary structural stability, the jacket structure 1 can be made of steel/iron legs and braces, securely fastened to each other at nodes along the legs. The largely 'empty' structure therefore presents a relatively small surface area to the forces acting on it above and below the water level.

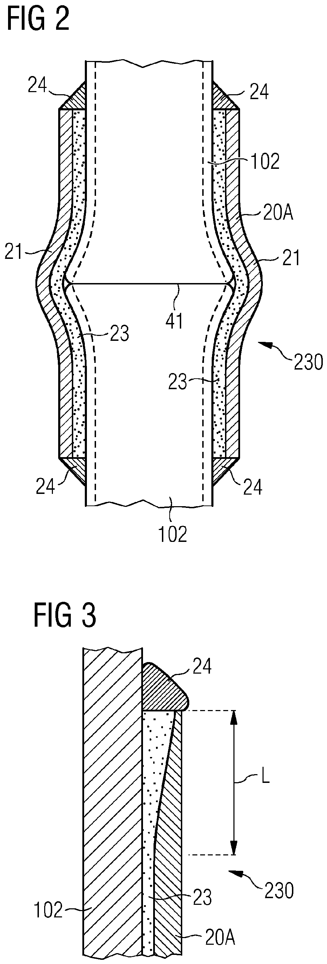

According to the invention, a significant number of the node-to-leg connections and the brace-to-node connections are made using adhesive joints. A grouted or glued node-to-leg connection is shown in cross-section in Fig. 2. Here, two node sleeve pieces 21 of a node sleeve 20A are shown, shaped to fit over a shear key joint 41 between leg pieces 102 (a flanged connection between the sleeve pieces 21 is not shown). In the shear key joint 41, the ends of the leg sections can abut directly. Any gaps between the node 20A and the leg pieces 102 are sealed using a seal 24 arranged around the circumference of the leg sections 102, and then an adhesive (e.g. an epoxy resin) 23 or grout 23 is pumped through a suitable channel (not shown) into the space between the node 20A and the leg pieces 102. The adhesive 23 or grout 23 is subsequently allowed to cure or harden. An advantage of such an adhesive joint 230 for a node sleeve 20A is that it can be mounted onto the leg while this is being held in a jacket assembly guide, and its position and/or orientation can be adjusted to accommodate for any intolerances or deviations regarding the length/position of the brace to which it is to be connected.

Fig. 3 shows a detail of a cross-section through a node 20A and a leg section 102 (which could be any type of leg section or part of a one-piece leg). Here, the node 20A has a tapered wall thickness so that the wall of the node 20A becomes progressively thinner towards the upper edge. Of course, the same tapered wall can be present at the lower region of the node 20A. The wall thickness decreases over a length L, which is preferably a significant portion of the node height, for example one fifth or one sixth of the node height.

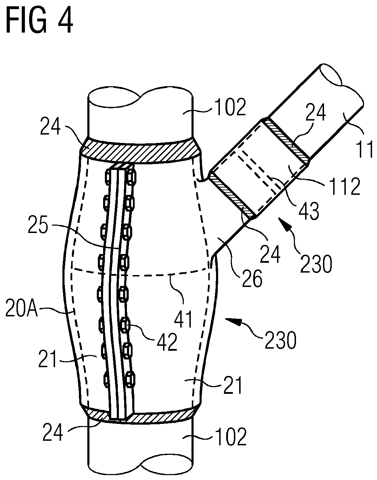

Fig. 4 shows a detail of a node-to-leg connection and a brace-to-node connection using adhesive joints. Here, the node 20A is shown in place around a shear key 41 joint (indicated by the dotted lines) between leg pieces 102. Node sleeve pieces 21 are joined by node flanges 25 and short bolts 42. A tubular extension 26 has the same diameter as the brace 11 and is shaped to meet the brace 11 at a butted joint 43 as indicated by the dashed lines. A brace sleeve 112 is arranged around this joint 43 and held in place by a layer of adhesive. For both sleeves 20A, 112, the adhesive is prevented from escaping by seals 24 arranged around the perimeters of the sleeves 20A, 112 until the adhesive is hardened or cured. Here, a single tubular extension 26 is shown on one sleeve piece 21. Of course, two such tubular extensions 26 could be cast on a single sleeve piece, so that the vertical node flanges 25 flank the tubular extensions 26. Alternatively, each sleeve piece 21 could be cast with a tubular extensions 26, so that the node flanges 25 run vertically between the tubular extensions 26.

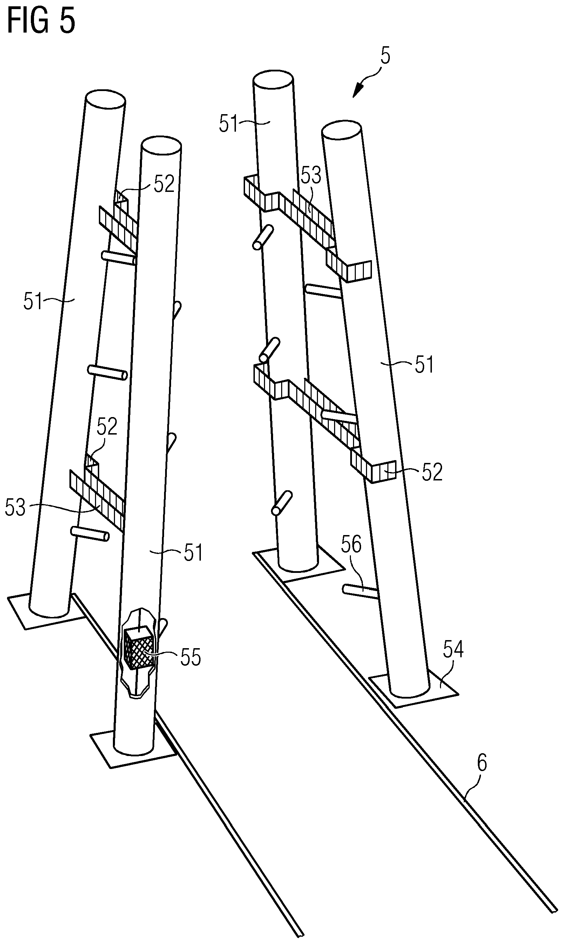

Fig. 5 shows a jacket assembly guide 5. Here, the jacket assembly guide 5 comprises four supporting towers 51 for each of four legs of a jacket structure. In this embodiment, each supporting tower 51 is tilted at an angle corresponding to the angle of a leg of an assembled jacket structure. The supporting towers 51 could themselves be held in place by some other module such as a crane or gantry. In this example, the supporting towers 51 are secured at ground level by anchoring to a suitable foundation 54. Each supporting leg 51 has a number of clamps 56 arranged at appropriate intervals for holding a leg of a jacket structure to be assembled. Access platforms 52 are arranged on the supporting towers 51. These access platforms 52 can be fixed at strategic positions along the supporting towers 51 to provide convenient access to node elements of the legs, or may be movable along the supporting towers 51. An elevator 55 (indicated by the dashed line) in a supporting tower 51 provides access to the access platforms 52. A gangway 53 provides access to node elements on legs held by supporting towers that do not have an access platform or elevator. The access platforms 52 and any gangways 53 are arranged on the jacket assembly guide 5 so that the assembled jacket structure can be skidded out from the jacket assembly guide 5 along tracks 6 of a skidding system.

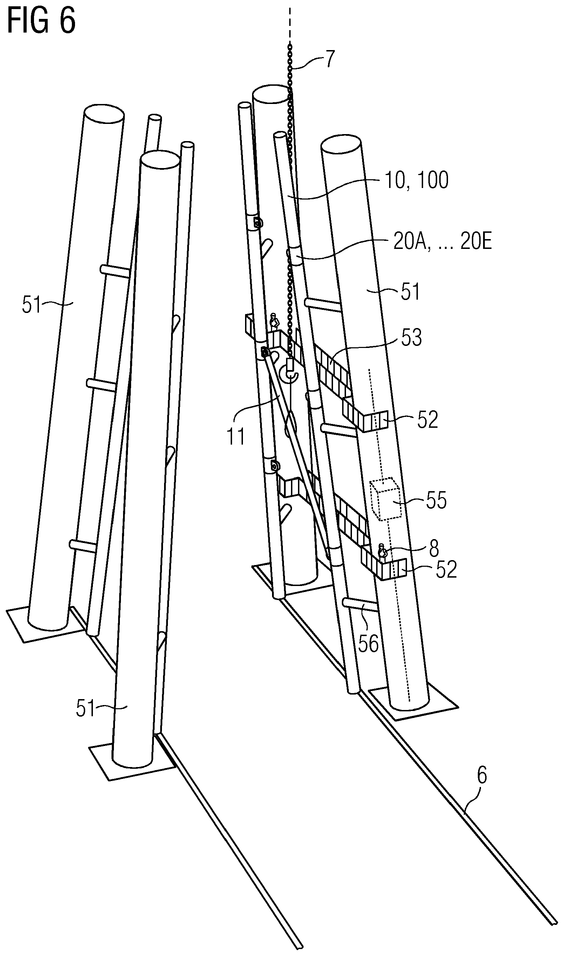

Fig. 6 shows a jacket structure being assembled using the jacket assembly guide 5 of Fig. 5. Here, the legs 10, 100 are clamped in place by the clamps 56 arranged on the supporting towers 51. The legs 10, 100 are therefore already held at the angle required to obtain the desired geometry of the finished jacket structure. A leg can be a one-piece leg 100 made of a single pipe piece, or can comprise several leg parts connected together by a shear key, by internal or external flanges, or by any other suitable joint. A crane (not shown) is used to hoist braces 11 into place between the legs 10. Workers 8 on the access platforms 52 can manoeuvre the braces 11 so that each end of a brace 11 is correctly positioned relative to a corresponding node element previously mounted on the leg 10, 100, for example a node sleeve 20A. Here, a brace 11 is shown suspended in place by crane tackle 7 of a crane, so that workers 8 on two access platforms can connect each end of the brace 11 to the node 20A on a leg 10, 100. Once the brace ends are connected to the nodes, the crane can be used to fetch the next brace 11. The workers need only form the brace-to-node connections at each end of the brace 11, and can then use the elevators 55 or gangways 53 to move to the next node in preparation for connecting the next brace 11. In this way, a fairly quick assembly process is made possible. Once the jacket structure 1 has been assembled, it can be released from the assembly guide 5 by skidding it along the skidding tracks 6, and the legs 10, 100 for the next jacket structure can be hoisted into place and clamped to the supporting towers 51.

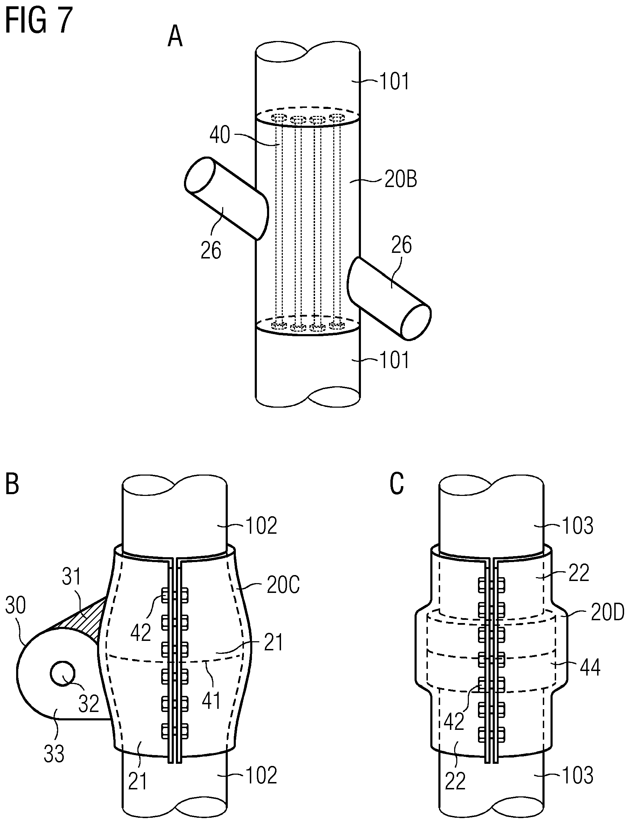

Fig. 7 shows various other realisations of node elements for connecting a leg to one or more braces of a jacket structure according to the invention. In a first embodiment shown in part A of the diagram, a node 20B is a cast node with two tubular extensions 26 arranged at appropriate angles for connecting to braces. In the example shown, the cast node 20B is connected to the leg parts 101 by means of long bolts 40 through flanges in the interior of the leg. Of course, such a node 20B can be realised with only one tubular extension 26, and two such nodes could be bolted, one above the other, between successive leg parts 101 of a leg.

In a second embodiment shown in part B of the diagram, a node 20C is realised as two halves 21 or shell pieces 21 shaped to fit over a shear key joint 41 or shear lock 41 between leg pieces 102. Instead of a tubular extension, one or more clevises 30 can be arranged onto a shell piece 21, for example by casting. Such a clevis 30 comprises a clevis tray 31 and side walls 33 with through holes 32 for connecting to a brace. The node sleeve pieces 21 can be bolted together using short bolts 42 on flanges along the vertical edges of the node sleeve pieces 21.

In a third embodiment shown in part C of the diagram, a node 20C is realised as two shell pieces 22 shaped to fit over an external flange joint 44 of two leg pieces 103, as indicated by the broken lines. This embodiment might be favourable if leg pieces 103 with external flanges, for bolting together using short bolts, are to be used. The node 20C can be cast with one or more tubular extensions or clevises for connecting to a corresponding number of braces.

A node can connect to more than one brace. For example, for a four-leg jacket, two tubular extensions or clevises can be arranged on a node at essentially right angles to provide connecting points for two braces arranged between two leg pairs, whereby one leg is common to each leg pair, and the node is arranged on that leg. For a three-leg jacket, two extensions could be arranged at an essentially 120° angle to each other on a single node.

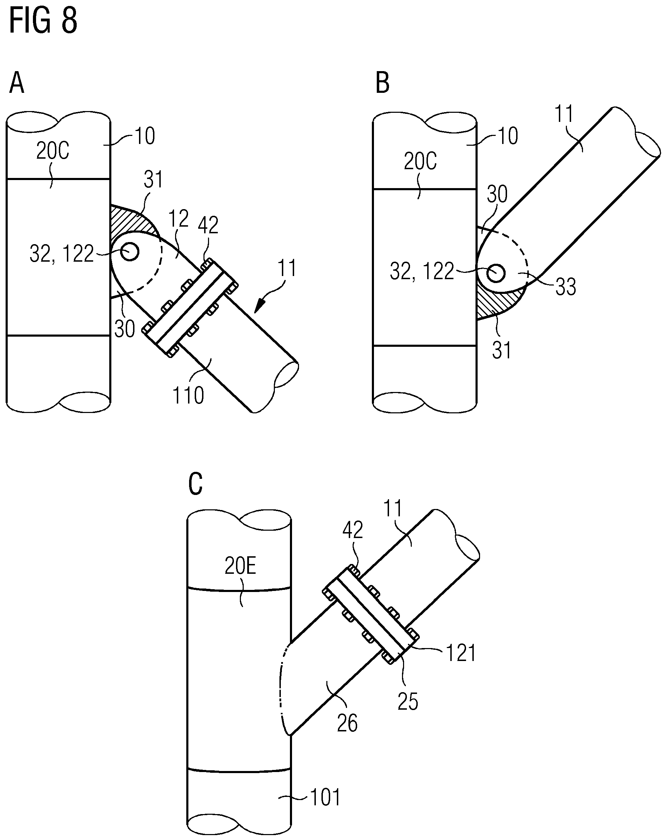

A brace 11 can comprise a pipe piece 110 with a cast gusset 12 at either end (only one is shown here) for connecting to a clevis of a node, as shown in Fig. 8. The cast gusset 12 is connected to the brace pipe piece 110 by means of a flange connection. The cast gusset 12 is solid with a through hole 122 that is dimensioned to sit between the through holes of a clevis. Part A of the diagram shows a brace 11 connected at its upper end to a downward-facing clevis 30 of a node. Here, node 20C is used as an example. The clevis tray 31 and the gusset 12 form a relatively close fit to prevent an upward movement of the brace 11. A suitable pin bolt can be passed through the through holes 32, 122 in order to connect the node and the brace 11. In part B of the diagram, a brace 11 is connected at its lower end to a upward-facing clevis 30 of a node 20C. The step of fastening the brace to the node is carried out while the leg is held in the jacket assembly guide. Part C of the diagram shows a flanged connection between a further node 20E and a brace 11 in a jacket structure according to the invention. Here, the node 20E and brace 11 are joined by means of a flange-to-flange joint. The node 20E comprises a cast tubular extension 26 arranged at a suitable angle to meet the brace 11. Here, the tubular extension 26 is shown to point upward, for connecting to a lower end of the brace 11, and comprises a flange at its outer end. The brace 11 also has a corresponding flange at its lower end. The flanges are connected by means of suitable short bolts.

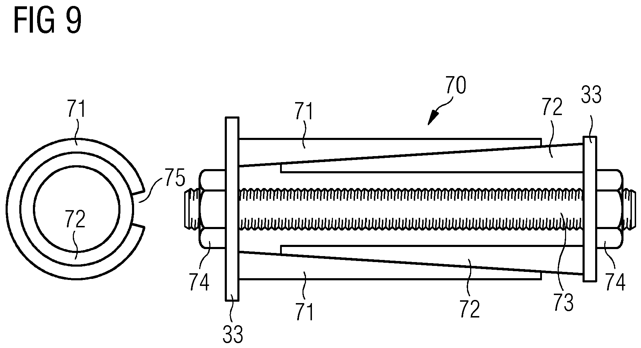

Fig. 9 shows a pin bolt 70, in this case an expansion bolt 70, for connecting a brace to a clevis node in a jacket structure according to the invention. The expansion bolt 70 comprises an inner cylinder 72 with a constant internal diameter and a tapering external diameter, and an outer cylinder 71 with a constant external diameter, a tapering internal diameter, and a longitudinal split. The cylinders 71, 72 are arranged around a threaded shaft 73. The external diameter of the outer cylinder 71 fits relatively closely inside the gusset through hole. The expansion bolt 70 is assembled between the clevis walls 33 and inside the gusset through-hole. The bolt 70 is then tightened by means of nuts 74 at the outer ends of the threaded shaft 73, so that the outer cylinder expands and is forced against the inside of the gusset through-hole. In this way, a sturdy connection is assured between a brace and a node, requiring relatively few fastening parts. Although the present invention has been disclosed in the form of preferred embodiments and variations thereon, it will be understood that numerous additional modifications and variations could be made thereto without departing from the scope of the invention, which is defined by the appended claims. For example, any of the bolted node connections shown in Fig. 7 could be augmented by an adhesive layer when used in the assembly of a jacket structure according to the invention. Braces that are used to connect the same two legs and that are arranged to "cross over" each other at an intersection may comprise brace sections connected at that intersection using any suitable joint, for example using an X-shaped sleeve piece which could be connected to the brace sections by an adhesive joint.

## Claims

1. A method of assembling a jacket structure (1), which jacket structure (1) comprises
- a plurality of legs (10, 100), a plurality of connecting braces (11) and a plurality of node elements (20A, 20C, 20D, 20E) arranged on the legs (10, 100) for connecting the braces (11) to the legs (10, 100);
- a node-to-leg connection between each node element (20A, 20C, 20D, 20E) and a leg (10, 100), wherein a node element (20A, 20C, 20D, 20E) comprises a sleeve, and wherein the wall thickness of the sleeve decreases towards an outer edge of the sleeve; and
- a brace-to-node connection between each brace (11) and a node element (20A, 20C, 20D, 20E);
wherein
- a node-to-leg connection and/or a brace-to-node connection comprises an adhesive joint (230); and
- the adhesive joint comprises a layer of adhesive (23) between a sleeve (20A, 112) and a component enclosed by the sleeve (20A, 112), wherein the adhesive comprises an epoxy resin or grout;
which method comprises the steps of
- forming a node-to-leg connection between each node element (20A, 20C, 20D, 20E) and a leg (10, 100), wherein a node element (20A, 20C, 20D, 20E) comprises a node sleeve, and wherein the wall thickness of the node sleeve decreases towards an outer edge of the sleeve;
- forming a brace-to-node connection between each brace (11) and a node element (20A, 20C, 20D, 20E);
wherein a node-to-leg connection and/or a brace-to-node connection comprises an adhesive joint (230).

2. A method according to claim 1, wherein the step of forming a node-to-leg connection between a node element (20A) and a leg (10, 100) comprises arranging a node sleeve (20A) around a leg (100) or a leg joint (41).

3. A method according to claim 2, wherein the step of arranging the node sleeve (20A) around the leg (100) or the leg joint (41) comprises connecting together at least two node sleeve pieces (21, 22).

4. A method according to claim 2 or claim 3, comprising the step of applying an adhesive (23) between an outside surface of a leg (10, 100) and an inside surface of the node sleeve (20A).

5. A method according to any of the preceding claims, wherein the step of forming a brace-to-node connection between a brace (11) and a node element (20A) comprises arranging a brace sleeve (112) to cover a joint (43) between the node element (20A) and the brace (11).

6. A method according to claim 5, comprising the step of applying an adhesive (23) between an inside surface of the brace sleeve (112) and outside surfaces of the node element (20A) and the brace (11).

7. A method according to any of the preceding claims, comprising the steps of
- connecting at least one leg (10, 100) of the plurality of legs (10, 100) to a supporting tower (51) of a jacket assembly guide (5) such that the leg (10, 100) is held in a position corresponding to the position of that leg (10, 100) in the assembled state of the jacket structure (1);
- holding a brace (11) of the plurality of connecting braces (11) in place between node elements (20A, 20C, 20D, 20E);
- providing connecting access to the node elements (20A, 20C, 20D, 20E) and the braces (11);
- connecting each brace (11) to the node elements (20A, 20C, 20D, 20E) between which it is held; and
- disconnecting the leg (10, 100) from the supporting tower (51) to release the assembled jacket structure (1).

8. A method according to claim 7, wherein the step of forming the node-to-leg connections is carried out prior to the step of forming the brace-to-node connections.

9. A jacket structure (1), in particular a jacket structure for supporting an offshore wind turbine (4), comprising a plurality of legs (10, 100), a plurality of connecting braces (11) and a plurality of node elements (20A, 20C, 20D, 20E) arranged on the legs (10, 100) for connecting the braces (11) to the legs (10, 100), which jacket structure (1) comprises
- a node-to-leg connection between each node element (20A, 20C, 20D, 20E) and a leg (10, 100), wherein a node element (20A, 20C, 20D, 20E) comprises a sleeve, and wherein the wall thickness of the sleeve decreases towards an outer edge of the sleeve; and
- a brace-to-node connection between each brace (11) and a node element (20A, 20C, 20D, 20E);
wherein a node-to-leg connection and/or a brace-to-node connection comprises an adhesive joint (230); and the adhesive joint comprises a layer of adhesive (23) between a sleeve (20A, 112) and a component enclosed by the sleeve (20A, 112), wherein the adhesive comprises an epoxy resin or grout.

10. A jacket structure according to claim 9, wherein the sleeve (20A) comprises at least two sleeve pieces (21, 22), wherein the sleeve pieces (21, 22) are joined by a bolted flange connection.

## Patentansprüche

1. Verfahren zum Zusammenbauen einer Jacket-Struktur (1), wobei diese Jacket-Struktur (1) umfasst:
- mehrere Beine (10, 100), mehrere verbindende Streben (11) und mehrere an den Beinen (10, 100) angeordnete Knotenelemente (20A, 20C, 20D, 20E) zum Verbinden der Streben (11) mit den Beinen (10, 100);
- eine Knoten-Bein-Verbindung zwischen jedem Knotenelement (20A, 20C, 20D, 20E) und einem Bein (10, 100), wobei ein Knotenelement (20A, 20C, 20D, 20E) eine Hülse umfasst, und wobei die Wanddicke der Hülse in Richtung eines äußeren Randes der Hülse abnimmt; und
- eine Strebe-Knoten-Verbindung zwischen jeder Strebe (11) und einem Knotenelement (20A, 20C, 20D, 20E);
wobei
- eine Knoten-Bein-Verbindung und/oder eine Strebe-Knoten-Verbindung eine Klebeverbindung (230) umfasst; und
- die Klebeverbindung eine Schicht Klebstoff (23) zwischen einer Hülse (20A, 112) und einer von der Hülse (20A, 112) umschlossenen Komponente umfasst, wobei der Klebstoff ein Epoxidharz oder Mörtel umfasst;
wobei das Verfahren die folgenden Schritte umfasst
- Bilden einer Knoten-Bein-Verbindung zwischen jedem Knotenelement (20A, 20C, 20D, 20E) und einem Bein (10, 100), wobei ein Knotenelement (20A, 20C, 20D, 20E) eine Knotenhülse umfasst, und wobei die Wanddicke der Knotenhülse in Richtung eines äußeren Randes der Hülse abnimmt;
- Bilden einer Strebe-Knoten-Verbindung zwischen jeder Strebe (11) und einem Knotenelement (20A, 20C, 20D, 20E); wobei eine Knoten-Bein-Verbindung und/oder eine Strebe-Knoten-Verbindung eine Klebeverbindung (230) umfasst.

2. Verfahren nach Anspruch 1, wobei der Schritt des Bildens einer Knoten-Bein-Verbindung zwischen einem Knotenelement (20A) und einem Bein (10, 100) das Anordnen einer Knotenhülse (20A) um ein Bein (100) oder eine Beinverbindungsstelle (41) herum umfasst.

3. Verfahren nach Anspruch 2, wobei der Schritt des Anordnens der Knotenhülse (20A) um das Bein (100) oder die Beinverbindungsstelle (41) herum das Verbinden von wenigstens zwei Knotenhülsenteilen (21, 22) miteinander umfasst.

4. Verfahren nach Anspruch 2 oder Anspruch 3, welches den Schritt des Aufbringens eines Klebstoffs (23) zwischen einer Außenfläche eines Beins (10, 100) und einer Innenfläche der Knotenhülse (20A) umfasst.

5. Verfahren nach einem der vorhergehenden Ansprüche, wobei der Schritt des Bildens einer Strebe-Knoten-Verbindung zwischen einer Strebe (11) und einem Knotenelement (20A) das Anordnen einer Strebenhülse (112) umfasst, um eine Verbindungsstelle (43) zwischen dem Knotenelement (20A) und der Strebe (11) zu bedecken.

6. Verfahren nach Anspruch 5, welches den Schritt des Aufbringens eines Klebstoffs (23) zwischen einer Innenfläche der Strebenhülse (112) und Außenflächen des Knotenelements (20A) und der Strebe (11) umfasst.

7. Verfahren nach einem der vorhergehenden Ansprüche, welches die folgenden Schritte umfasst:
- Verbinden wenigstens eines Beins (10, 100) der mehreren Beine (10, 100) mit einem Stützturm (51) einer Jacket-Montageführung (5), sodass das Bein (10, 100) in einer Position gehalten wird, die der Position dieses Beins (10, 100) im zusammengebauten Zustand der Jacket-Struktur (1) entspricht;
- Halten einer Strebe (11) der mehreren verbindenden Streben (11) in ihrer Lage zwischen Knotenelementen (20A, 20C, 20D, 20E) ;
- Gewährleisten eines Verbindungszugangs zu den Knotenelementen (20A, 20C, 20D, 20E) und den Streben (11);
- Verbinden jeder Strebe (11) mit den Knotenelementen (20A, 20C, 20D, 20E), zwischen denen sie gehalten wird; und
- Lösen des Beins (10, 100) von dem Stützturm (51), um die zusammengebaute Jacket-Struktur (1) freizugeben.

8. Verfahren nach Anspruch 7, wobei der Schritt des Bildens der Knoten-Bein-Verbindungen vor dem Schritt des Bildens der Strebe-Knoten-Verbindungen ausgeführt wird.

9. Jacket-Struktur (1), insbesondere Jacket-Struktur zum Abstützen einer Offshore-Windenergieanlage (4), mehrere Beine (10, 100), mehrere verbindende Streben (11) und mehrere an den Beinen (10, 100) angeordnete Knotenelemente (20A, 20C, 20D, 20E) zum Verbinden der Streben (11) mit den Beinen (10, 100) umfassend, wobei diese Jacket-Struktur (1) umfasst:
- eine Knoten-Bein-Verbindung zwischen jedem Knotenelement (20A, 20C, 20D, 20E) und einem Bein (10, 100), wobei ein Knotenelement (20A, 20C, 20D, 20E) eine Hülse umfasst, und wobei die Wanddicke der Hülse in Richtung eines äußeren Randes der Hülse abnimmt; und
- eine Strebe-Knoten-Verbindung zwischen jeder Strebe (11) und einem Knotenelement (20A, 20C, 20D, 20E);
wobei eine Knoten-Bein-Verbindung und/oder eine Strebe-Knoten-Verbindung eine Klebeverbindung (230) umfasst; und die Klebeverbindung eine Schicht Klebstoff (23) zwischen einer Hülse (20A, 112) und einer von der Hülse (20A, 112) umschlossenen Komponente umfasst, wobei der Klebstoff ein Epoxidharz oder Mörtel umfasst.

10. Jacket-Struktur nach Anspruch 9, wobei die Hülse (20A) wenigstens zwei Hülsenteile (21, 22) umfasst, wobei die Hülsenteile (21, 22) durch eine verschraubte Flanschverbindung verbunden sind.

## Revendications

1. Procédé d'assemblage de structure treillis (1), laquelle structure treillis (1) comprend :
- une pluralité de pieds (10, 100), une pluralité d'entretoises de jonction (11) et une pluralité d'éléments de noeud de liaison (20A, 20C, 20D, 20E) installés sur les pieds (10, 100) pour relier les entretoises (11) aux pieds (10, 100) ;
- une liaison noeud-pied entre chaque élément de noeud (20A, 20C, 20D, 20E) et un pied (10, 100), un élément de noeud (20A, 20C, 20D, 20E) comprenant un manchon et l'épaisseur de paroi du manchon diminuant en direction d'un bord extérieur du manchon ; et
- une liaison entretoise-noeud entre chaque entretoise (11) et un élément de noeud (20A, 20C, 20D, 20E) ;
- une liaison noeud-pied et/ou une liaison entretoise-noeud comprenant un joint adhésif (230) ; et
- le joint adhésif comprenant une couche d'adhésif (23) entre un manchon (20A, 112) et un composant entouré par le manchon (20A, 112), l'adhésif comprenant une résine époxy ou un coulis de ciment ;
lequel procédé comprend les étapes de
- formation d'une liaison noeud-pied entre chaque élément de noeud (20A, 20C, 20D, 20E) et un pied (10, 100), un élément de noeud (20A, 20C, 20D, 20E) comprenant un manchon de noeud et l'épaisseur de paroi du manchon de noeud diminuant en direction d'un bord extérieur du manchon ;
- formation d'une liaison entretoise-noeud entre chaque entretoise (11) et un élément de noeud (20A, 20C, 20D, 20E) ;
une liaison noeud-pied et/ou une liaison entretoise-noeud comprenant un joint adhésif (230).

2. Procédé selon la revendication 1, l'étape de formation d'une liaison noeud-pied entre un élément de noeud (20A) et un pied (10, 100) comprenant l'installation d'un manchon de noeud (20A) autour d'un pied (100) ou d'un joint de pied (41).

3. Procédé selon la revendication 2, l'étape d'installation du manchon de noeud (20A) autour du pied (100) ou du joint de pied (41) comprenant l'assemblage d'au moins deux pièces de manchon de noeud (21, 22).

4. Procédé selon la revendication 2 ou la revendication 3, comprenant l'étape d'application d'un adhésif (23) entre une surface extérieure d'un pied (10, 100) et une surface intérieure du manchon de noeud (20A).

5. Procédé selon l'une quelconque des revendications précédentes, l'étape de formation d'une liaison entretoise-noeud entre une entretoise (11) et un élément de noeud (20A) comprend l'installation d'un manchon d'entretoise (112) pour couvrir un joint (43) entre l'élément de noeud (20A) et l'entretoise (11).

6. Procédé selon la revendication 5, comprenant l'étape d'application d'un adhésif (23) entre une surface intérieure du manchon d'entretoise (112) et des surfaces extérieures de l'élément de noeud (20A) et de l'entretoise (11).

7. Procédé selon l'une quelconque des revendications précédentes, comprenant les étapes consistant à
- fixer au moins un pied (10, 100) de la pluralité de pieds (10, 100) sur un mât de support (51) d'un guide d'assemblage de treillis (5) de façon que le pied (10, 100) soit maintenu dans une position correspondant à la position de ce pied (10, 100) une fois la structure treillis (1) assemblée ;
- maintenir une entretoise (11) de la pluralité d'entretoises de liaison (11) en place entre des éléments de noeud (20A, 20C, 20D, 20E) ;
- assurer un accès aux éléments de noeud (20A, 20C, 20D, 20E) et aux entretoises (11) pour la liaison ;
- relier chaque entretoise (11) aux éléments de noeud (20A, 20C, 20D, 20E) entre lesquels elle est maintenue ; et
- détacher le pied (10, 100) du mât de support (51) pour dégager la structure treillis (1) assemblée.

8. Procédé selon la revendication 7, l'étape de formation des liaisons noeud-pied étant réalisée avant l'étape de formation des liaisons entretoise-noeud.

9. Structure treillis (1), en particulier structure treillis destinée à supporter une éolienne en mer (4), comprenant une pluralité de pieds (10, 100), une pluralité d'entretoises de liaison (11) et une pluralité d'éléments de noeud (20A, 20C, 20D, 20E) installés sur les pieds (10, 100) pour relier les entretoises (11) aux pieds (10, 100), laquelle structure treillis (1) comprend
- une liaison noeud-pied entre chaque élément de noeud (20A, 20C, 20D, 20E) et un pied (10, 100), un élément de noeud (20A, 20C, 20D, 20E) comprenant un manchon et l'épaisseur de paroi du manchon diminuant en direction d'un bord extérieur du manchon ; et
- une liaison entretoise-noeud entre chaque entretoise (11) et un élément de noeud (20A, 20C, 20D, 20E) ;
une liaison noeud-pied et/ou une liaison entretoise-noeud comprenant un joint adhésif (230) ; et le joint adhésif comprenant une couche d'adhésif (23) entre un manchon (20A, 112) et un composant entouré par le manchon (20A, 112), l'adhésif comprenant une résine époxy ou un coulis de ciment.

10. Structure treillis selon la revendication 9, le manchon (20A) comprenant au moins deux pièces de manchon (21, 22), les pièces de manchon (21, 22) étant jointes par un assemblage par brides et boulons.
